# EUROPÄISCHE PATENTSCHRIFT

(11) **EP 3 818 467 B1**
(45) Veröffentlichungstag und Bekanntmachung des Hinweises auf die Patenterteilung: **11.02.2026**
(21) Anmeldenummer: 19729735.1
(22) Anmeldetag: 06.06.2019
(51) Int. Cl.: G01S 7/40, G01S 7/41, G01S 7/48, G06F 18/214, G06V 20/56, G01S 13/931, G01S 17/931

(54) **REALISTISCHERE SIMULATION PHYSIKALISCHER MESSDATEN**
MORE REALISTIC SIMULATION OF PHYSICAL MEASUREMENT DATA
SIMULATION PLUS RÉALISTE DES DONNÉES DE MESURE PHYSIQUES

(30) Priorität: 03.07.2018 DE 102018210937
(43) Veröffentlichungstag der Anmeldung: 12.05.2021
(73) Patentinhaber: Robert Bosch GmbH, 70442 Stuttgart (DE)
(72) Erfinder: JUNGINGER, Andrej, 70197 Stuttgart (DE); HANSELMANN, Markus, 70563 Stuttgart (DE); STRAUSS, Thilo, 71636 Ludwigsburg (DE); BOBLEST, Sebastian, 73105 Duernau (DE); ULMER, Holger, 89077 Ulm (DE); BUCHNER, Jens Stefan, 74321 Bietigheim-Bissingen (DE)
(86) Internationale Anmeldenummer: PCT/EP2019/064870
(87) Internationale Veröffentlichungsnummer: WO 2020/007566

(56) Entgegenhaltungen:
- TIM ALLAN WHEELER ET AL: "Deep Stochastic Radar Models", ARXIV.ORG, CORNELL UNIVERSITY LIBRARY, 201 OLIN LIBRARY CORNELL UNIVERSITY ITHACA, NY 14853, 31 January 2017 (2017-01-31), XP080752628, DOI: 10.1109/IVS.2017.7995697
- FELIX ROHRBACH: "Point Density and Point Spacing/point-density-and-point-spacing/ Go SEP OCT NOV", 14 October 2015 (2015-10-14), XP055612257, Retrieved from the Internet <URL:https://web.archive.org/web/20151014170322/https://felix.rohrba.ch/en/2015/point-density-and-point-spacing/> [retrieved on 20190812]
- CHA MIRIAM ET AL: "Improving Sar Automatic Target Recognition Using Simulated Images Under Deep Residual Refinements", 2018 IEEE INTERNATIONAL CONFERENCE ON ACOUSTICS, SPEECH AND SIGNAL PROCESSING (ICASSP), IEEE, 15 April 2018 (2018-04-15), pages 2606 - 2610, XP033401382, DOI: 10.1109/ICASSP.2018.8462109
- GUO JIAYI ET AL: "Synthetic Aperture Radar Image Synthesis by Using Generative Adversarial Nets", IEEE GEOSCIENCE AND REMOTE SENSING LETTERS, IEEE SERVICE CENTER, NEW YORK, NY, US, vol. 14, no. 7, 1 July 2017 (2017-07-01), pages 1111 - 1115, XP011654566, ISSN: 1545-598X, [retrieved on 20170622], DOI: 10.1109/LGRS.2017.2699196

## Beschreibung

Die vorliegende Erfindung betrifft ein Verfahren zur realistischeren Simulation physikalischer Messdaten, welches beispielsweise zur Generierung von Trainingsdaten für Kl-Systeme im Bereich des autonomen Fahrens einsetzbar ist.

### Stand der Technik

Damit sich ein Fahrzeug zumindest teilweise automatisiert im Straßenverkehr bewegen kann, ist es erforderlich, das Umfeld des Fahrzeugs zu erfassen und Gegenmaßnahmen einzuleiten, falls eine Kollision mit einem Objekt im Umfeld des Fahrzeugs droht. Auch die Erstellung einer Umfeld-Repräsentation und Lokalisierung sind für sicheres automatisiertes Fahren notwendig.

Die Erfassung von Objekten mittels Radar ist von den Lichtverhältnissen unabhängig und beispielsweise auch bei Nacht auf größere Entfernung möglich, ohne dass der Gegenverkehr durch Fernlicht geblendet wird. Weiterhin kann Radar als einziger Sensor "durch" vorausfahrende Fahrzeuge hindurchsehen, indem Radarwellen durch Reflexion an Leitplanken oder anderen Objekten um ein Fahrzeug herumgeleitet werden. Dadurch können etwa Notbremsungen des übernächsten Fahrzeugs bereits erkannt werden, bevor das unmittelbar vorausfahrende Fahrzeug verzögert.

Die US 8,682,821 B2 offenbart, Radarsignale mittels maschinellem Lernen dahingehend zu klassifizieren, ob sie von der Bewegung bestimmter Objekte oder nichtmenschlicher Tiere herrühren. Diese Erkenntnis kann genutzt werden, um bei der Überwachung eines Bereichs auf menschliche Eindringlinge Falschalarme zu vermeiden, oder auch um beim zumindest teilweise automatisierten Fahren die richtige Aktion zur Kollisionsvermeidung auszuwählen.

Das maschinelle Lernen benötigt Lern-Radardaten von Lern-Szenerien, deren Gehalt an Objekten bzw. Tieren jeweils bekannt ist.

Die Veröffentlichung der Autoren Wheeler, T. A., Holder, M., Winner, H., and Kochenderfer, M., "Deep Stochastic Radar Models", arXiv:1701.09180, 2017. doi:10.48550/arXiv.1701.09180 offenbart eine eine Methode zur Erstellung stochastischer Auto-Radarmodelle mittels Deep Learning mit adversariellem Verlust, die an realen Daten trainiert werden.

### Offenbarung der Erfindung

Die Erfindung wird durch die angehängten Ansprüche definiert. Es wurde erkannt, dass gerade bei der Objekterkennung aus Radarsignalen mittels maschinellem Lernen die notwendigen Lerndaten eine knappe Ressource sind. Lerndaten für die Objekterkennung aus Kamerabildern umfassen üblicherweise Lern-Kamerabilder, die von Menschen dahingehend kommentiert (gelabelt) worden sind, an welcher Stelle welche Objekte in ihnen enthalten sind. Die visuelle Erkennung von Objekten ist gerade für den Menschen besonders intuitiv, so dass die Anforderungen an Hilfskräfte für die Kommentierung von Kamerabildern vergleichsweise gering sind. Objekte aus Radarsignalen zu erkennen erfordert hingegen Spezialwissen. Weiterhin hängt das Radarsignal, das ein und dasselbe Objekt produziert, auch von den Eigenschaften der verwendeten Antennen und Sensoren ab, beispielsweise vom Modulationsmuster des Sensors oder davon, wo und wie der Sensor am Fahrzeug montiert ist. Das Signal kann durch Mehrwegeausbreitung verändert werden, beispielsweise indem es mehrfach an verschiedenen Oberflächen (etwa der Fahrbahn, einer Leitplanke und/oder einer Wand) reflektiert wurde. Schließlich ist das Radarsignal auch materialabhängig. Einige Materialien reflektieren Radarwellen mit unterschiedlichen material- und form-abhängigen Rückstreukoeffizienten, während andere Materialien von den Radarwellen durchdrungen werden, was dann wiederum dazu führen kann, dass eigentlich verdeckte Objekte plötzlich im Radarsignal auftauchen.

Im Ergebnis sind also Lerndaten für die Objekterkennung aus Radarsignalen zum einen schwieriger zu beschaffen, und zum anderen werden auch mehr Lerndaten benötigt als für die Objekterkennung aus Kamerabildern. Um diese Knappheit zu lindern, wurde ein Verfahren entwickelt, das unter anderem die Generierung realistischerer simulierter (synthetischer) Radardaten ermöglicht.

Da die Ausbreitung, Absorption und Reflexion von Radarwellen bekannten physikalischen Gesetzen folgt, lässt sich aus einer vorgegebenen Anordnung aus Sender, Empfänger und zu beobachtender Szenerie das am Empfänger zu erwartende Radarsignal berechnen. Auf diese Weise können in automatisierter Weise Lern-Radardaten von Szenerien, deren Gehalt an Objekten vorab bekannt ist, erzeugt werden.

Allerdings sind diese synthetischen Lern-Radardaten in der Regel qualitativ wesentlich hochwertiger als die mit realen physikalischen Messungen erhältlichen Radardaten. Ein realer Sensor prägt dem Signal immer auch spezielle Sensoreigenschaften auf. So zeigen die real gemessenen Radar-Reflexionen ein charakteristisches Rauschen, das dafür sorgt, dass die Reflexionen in ihrer Position variieren können oder in einzelnen Messungen gar nicht auftreten. Dieses Rauschen ist unter anderem vom Abstand der Objekte zum Sensor abhängig. So ist speziell in der Nähe des Fahrzeugs ein stärkeres Rauschen vorhanden, das auf Grund der Anordnung der Radarantennen auch noch eine charakteristische, räumliche Struktur aufweisen kann. Ein weiteres charakteristisches Radar-Phänomen ist das Ghosting, was bedeutet, dass Objekte, beispielsweise durch Spiegelung der Radarstrahlung an Leitplanken, an Stellen detektiert werden, an denen sie sich gar nicht befinden.

Wenn eine Objekterkennung auf der Basis von Radardaten mit derart idealisierten synthetischen Lern-Radardaten trainiert wird, besteht somit eine Rest-Unsicherheit dahingehend, inwieweit sich im realen Fahrbetrieb die genannten Störungen und Verfälschungen, die beim Lernen kein Thema gewesen sind, auf das Ergebnis der Objekterkennung auswirken.

Um diese Rest-Unsicherheit zu vermindern, wird ein Verfahren zum Aufprägen des Einflusses einer physikalischen Eigenschaft, die die durch physikalische Messung erhaltenen Messdaten, welche in mindestens einer Lern-Punktwolke P_{L} in einer Domäne B enthalten sind, gemeinsam haben, auf simulierte Messdaten in einer Simulations-Punktwolke P_{A} in einer Domäne A vorgeschlagen.

Dabei umfasst der Begriff der Punktwolke in diesem Zusammenhang ganz allgemein eine Menge von Punkten eines Vektorraums, die durch die Raumkoordinaten der in ihr enthaltenen Punkte beschrieben ist. Eine organisierte räumliche Struktur, wie sie beispielsweise in digitalen Bildern durch Nachbarschaftsbeziehungen zwischen Pixeln vorgegebenen ist, gibt es in einer solchen Punktwolke nicht. Auch ist in einer Punktwolke, anders als in einem Bild mit fester Größe, keine feste Anzahl von Punkten vorgegeben.

Beispielsweise lassen sich Radar-Messdaten vorteilhaft als Punktwolken darstellen. So kann beispielsweise für einen einzelnen Radar-Reflex eine Winkelposition relativ zum Empfänger in Verbindung mit der ermittelten Entfernung zum reflektierenden Objekt erfasst werden. Ein solches einzelnes Messergebnis kann als ein Punkt in einem Raum angesehen werden. Ist beispielsweise eine Koordinate des Punkts durch die Winkelposition und die andere Koordinate durch die Entfernung angegeben, so lebt dieser Punkt in einem zweidimensionalen Raum. Neuere Radar- oder Lidar-Geräte erfassen zusätzlich eine zweite Winkelkoordinate für die Höhe des Reflexes. Ein Punkt, der den Reflex repräsentiert, lebt dann in einem dreidimensionalen Raum. Eine vollständige Radarmessung eines Fahrzeugumfelds umfasst nun eine Vielzahl von Reflexen an verschiedenen Winkelpositionen und ggfs. in verschiedenen Höhen, und die jeweils entstehenden Punkte können als Punktwolke dargestellt werden.

Wenn bei den Messungen zusätzlich noch weitere Messgrößen erfasst werden, wie etwa eine Intensität oder eine weitere Raumkoordinate, so kann der Raum, in dem die einzelnen Punkte der Punktwolke leben, auch noch mehr Dimensionen umfassen. Unabhängig von der Anzahl der Dimensionen repräsentieren die realen Messdaten, bzw. die simulierten Messdaten, in den Punktwolken P_{L} bzw. P_{A} jeweils Koordinaten, wie am zwei- bzw. dreidimensionalen Beispiel beschrieben.

Der Begriff der Domäne bezeichnet in diesem Zusammenhang ganz allgemein Mengen von Elementen, hier Punktwolken, die eine vorgegebene Eigenschaft gemeinsam haben. Die Domäne A umfasst also alle Simulations-Punktwolken P_{A}, die simulierte Messdaten enthalten, und die Domäne B umfasst alle Lern-Punktwolken P_{L}, die durch physikalische Messung erhaltene Messdaten enthalten. Dabei können insbesondere die Punkte in den Punktwolken P_{A} und P_{L} im gleichen Raum leben, d.h., jedes als Punkt dargestellte Einzel-Messergebnis kann unabhängig davon, ob es sich um ein reales oder um ein simuliertes Messergebnis handelt, den gleichen Satz Messgrößen umfassen.

Die physikalische Eigenschaft, deren Einfluss der Simulations-Punktwolke P_{A} der simulierten Messdaten aufzuprägen ist, kann nach dem zuvor Beschriebenen insbesondere vorteilhaft mindestens eine Störung oder ein Artefakt sein, der bei der physikalischen Messung der Messdaten auftritt. Das Verfahren ist jedoch nicht auf diese speziellen physikalischen Eigenschaften beschränkt.

Bei dem Verfahren wird die Simulations-Punktwolke P_{A} in eine Dichteverteilung ρ_{A} in der Domäne A überführt. Die Dichteverteilung kann optional normiert werden. Beispielsweise ist für eine Verarbeitung durch neuronale Netze eine Normierung auf das Intervall [0; 1] vorteilhaft. Eine weitere sinnvolle Möglichkeit besteht darin, die Dichteverteilung so zu normieren, dass sie direkt als Wahrscheinlichkeitsdichte interpretiert werden kann. Hierfür ist dann zusätzlich gefordert, dass das Integral über die Verteilung gleich 1 ist.

Es wird nun die Dichteverteilung ρ_{A} mit einer Transformation in eine Dichteverteilung ρ_{B} in der Domäne B überführt. Diese Transformation ist so beschaffen, dass in der Domäne B ununterscheidbar ist, ob eine gegebene Dichteverteilung ρ direkt in der Domäne B als eine Dichteverteilung ρ_{L} einer Lern-Punktwolke P_{L} oder aber als Transformierte ρ_{B} einer Dichteverteilung ρ_{A} erhalten wurde. Wie später noch beschrieben wird, wird eine derartige Transformation mit maschinellem Lernen erhalten, nämlich durch Trainieren eines "Generative Adversarial Networks", GAN. Die Wirkung der Transformation im Rahmen des Verfahrens ist jedoch nicht daran gebunden, auf welche Weise sie erhalten wurde.

In der Domäne B wird eine Ergebnis-Punktwolke P_{B}, die statistisch mit der Dichteverteilung ρ_{B} im Einklang ist, erzeugt. Dies kann beispielsweise geschehen, indem zufällig Koordinaten von Kandidaten-Punkten in der Domäne B bestimmt werden und jeder Kandidaten-Punkt mit einer Wahrscheinlichkeit, die seinen Koordinaten durch die Dichteverteilung ρ_{B} zugeordnet wird, akzeptiert wird.

Die Ergebnis-Punktwolke P_{B} wird als Ergebnis des Aufprägens des Einflusses der gewünschten Eigenschaft auf die simulierten Messdaten in der Simulations-Punktwolke P_{A} gewertet.

Ein wesentlicher Vorteil des Verfahrens ist, dass keine genaue Beschreibung der physikalischen Eigenschaft, deren Einfluss auf die simulierten Messdaten aufgeprägt werden soll, erforderlich ist. Es genügt, wenn eine hinreichend große Menge an realen Messdaten vorhanden ist, die mit der physikalischen Eigenschaft behaftet sind.

Weiterhin ist es nicht erforderlich, dass die simulierten Messdaten und die durch physikalische Messung erhaltenen Messdaten sich auf gleiche Szenerien beziehen. Die Lern-Daten in Form einer oder mehrerer Lern-Punktwolken P_{L} können also beliebige reale Daten sein, wie sie beispielsweise im normalen Fahrbetrieb eines Fahrzeugs anfallen. Es reicht für das Lernen aus, unabhängige Beispiele aus den beiden Domänen A und B zu kennen.

Schließlich lassen sich auf der Ebene der Dichteverteilungen ρ_{A} und ρ_{B} auch statistische Effekte beschreiben, wie etwa zusätzliche Radar-Reflexe, die bei bestimmten Einzelmessungen auftreten und anschließend wieder verschwinden.

In einer vorteilhaften Ausgestaltung wird die Dichteverteilung ρ_{A} in der Domäne A bestimmt, indem die Domäne A in Voxel diskretisiert wird, wobei jeder Punkt der Simulations-Punktwolke P_{A} eindeutig genau einem Voxel zugeordnet wird. Ein Voxel ist in diesem Zusammenhang der Oberbegriff für "Pixel", der auch für mehr als zwei Dimensionen erklärt ist. Dabei muss die Auflösung, mit der die Domäne A diskretisiert wird, nicht für alle Koordinatenrichtungen der Punkte identisch sein. Wenn in einem Punkt beispielsweise ein Winkel und eine Entfernung zusammengefasst sind, so kann die Domäne A beispielsweise bezüglich des Winkels feiner diskretisiert werden als bezüglich der Entfernung. Die auf diese Weise gebildete Dichteverteilung ρ_{A} gibt für jeden Voxel die Zahl der Punkte an, die sich in diesem Voxel befinden.

Die Auflösung, mit der die Domäne A diskretisiert wird, kann unabhängig von der Auflösung gewählt werden, in der die durch physikalische Messung gewonnenen Messdaten in der Domäne B verfügbar sind. So können beispielsweise bei der Transformation hoch aufgelöste Simulationsdaten auf niedriger aufgelöste Realdaten abgebildet werden oder umgekehrt.

Besonders vorteilhaft wird die Dichteverteilung als Bild interpretiert, in dem jeder Voxel ein Pixel repräsentiert mit einem Intensitätswert, der von der Anzahl der dem Voxel zugeordneten Punkte abhängt. Auf diese Weise kann eine Transformation, die für die Verarbeitung von Bildern vorgesehen ist, für das Verfahren zweckentfremdet bzw. angepasst werden. Beispielsweise können tiefe neuronale Netze, welche für die Domänenübersetzung von Bildern (etwa zwischen Sommer- und Winterbildern, zwischen Bildern von Äpfeln und Orangen oder zwischen Fotos und von einem bestimmten Künstler gemalten Bildern) verwendet werden, für die Durchführung der Transformation im Rahmen des Verfahrens trainiert werden.

Vorteilhaft sind die zu unterschiedlichen Punktewolken P_{A} gehörende Dichteverteilungen ρ_{A}, die sich auf dasselbe Messobjekt beziehen, als unterschiedliche Farbkanäle in einem Bild zusammengefasst. Auf diese Weise können diese Punktewolken P_{A} gleichzeitig verarbeitet werden. Wenn für die Transformation ein tiefes neuronales Netz mit Convolution-Filtern verwendet wird, können durch entsprechende Wahl der Dimension der Convolution-Filter auch Korrelationen zwischen den einzelnen Kanälen berücksichtigt werden. Für die Anzahl der Kanäle gibt es keine prinzipielle Grenze.

Dabei können sich die unterschiedlichen Simulations-Punktwolken P_{A} insbesondere vorteilhaft auf Simulationen unterschiedlicher physikalischer Kontraste beziehen, die das Messobjekt hervorruft. Beispielsweise können etwa gleichzeitige Messungen mit Radar, Lidar und Ultraschall simuliert und die entsprechenden Dichteverteilungen ρ_{A} in die Farbkanäle Rot, Grün und Blau eines Bildes im RGB-Farbraum kodiert werden. Analog können beispielsweise die zu vier gleichzeitigen simulierten Messungen gehörenden Dichteverteilungen ρ_{A} in die Farbkanäle Cyan, Magenta, Gelb und Schwarz eines Bildes im CMYK-Farbraum kodiert werden. Die einzelnen Kanäle müssen in dieser Analogie jedoch nicht realen Farben entsprechen. Es ist also möglich, eine beliebige Anzahl von k Messgrößen in einem künstlichen, k-dimensionalen "Farbraum" zu kodieren und zu verarbeiten.

Nach dem zuvor Beschriebenen werden insbesondere vorteilhaft Objektlokalisierungen durch einen Radarsensor, durch einen Lidar-Sensor, und/oder durch einen Ultraschallsensor, in Form mindestens von Winkeln und zugehörigen Abständen als Messdaten gewählt. Gerade bei diesen Typen von Messungen treten in der Realität häufig schwer analytisch zu beschreibende Störungen und Artefakte auf, so dass der Bedarf besteht, die Einflüsse entsprechender Effekte auf simulierte Messdaten aufzuprägen. Zugleich liegen auch gerade diese Messdaten nicht als geordnete Bilder vor, sondern als Punktwolken ohne geordnete Nachbarschaftsbeziehung, so dass der beschriebene Weg über Dichteverteilungen besonders vorteilhaft ist.

Die Transformation wird mit einem KI-Modul durchgeführt, welches eine mit einer Vielzahl von Parametern parametrisierte interne Verarbeitungskette aufweist, wobei die Parameter so gesetzt sind, dass in der Domäne B ununterscheidbar ist, ob eine gegebene Dichteverteilung ρ mit dem KI-Modul erzeugt wurde oder aber direkt in der Domäne B als eine Dichteverteilung ρ_{L} einer Lern-Punktwolke P_{L} erhalten wurde. Das KI-Modul wird trainiert, indem es in einem "Generative Adversarial Network", GAN, gegen einen Diskriminator antritt, der versucht, die vom KI-Modul erzeugten Dichteverteilungen von direkt in der Domäne B aus Lern-Punktwolken P_{L} erhaltenen Dichteverteilungen ρ_{L} zu unterscheiden.

Wie zuvor beschrieben, kann das KI-Modul insbesondere mindestens ein tiefes neuronales Netz auf der Basis von Convolution-Filtern umfassen.

Die Erfindung bezieht sich auch auf einen Datensatz aus einer Vielzahl von Punktwolken P_{B} mit simulierten Messdaten, denen eine nicht in der Simulation enthaltene, physikalisch beobachtete Eigenschaft aufgeprägt ist, wobei dieser Datensatz mit dem beschriebenen Verfahren erhalten wurde. Wie eingangs erläutert, sind die in diesem Datensatz enthaltenen simulierten Messdaten unmittelbar als Trainingsdaten für die Erkennung von Objekten oder Situationen im Umfeld eines Fahrzeugs verwendbar, ohne dass es eines manuellen "Labellings" der enthaltenen Objekte bzw. Situationen bedarf. Dabei bewirkt das Aufprägen des Einflusses der physikalischen Eigenschaft, dass diese Eigenschaft beim Training der Erkennung mit berücksichtigt wird.

Der Datensatz ist insofern ein eigenständig verkaufbares Produkt mit dem Kundennutzen, dass das Training der Erkennung zum einen mit weniger menschlicher Arbeitskraft für das Labeln von Trainingsdaten auskommt und zum anderen einen umfassenderen Kanon an Szenerien umfasst. Insbesondere kann in dem Datensatz beispielsweise die Gewichtung der Häufigkeit, mit der bestimmte Szenerien vorkommen, angepasst werden. So können beispielsweise zu einer Verkehrssituation, die selten und zugleich gefährlich ist, gezielt mehr simulierte Messdaten in den Datensatz aufgenommen werden. Auf diese Weise kann der Tendenz entgegen gewirkt werden, dass die im Fahrbetrieb häufig vorkommenden Szenerien beim Training der Erkennung tonangebend sind und die selten vorkommenden Szenerien "verdrängen".

Als weiteres Produkt ist das für die Transformation verwendete KI-Modul im trainierten Zustand denkbar. Der trainierte Zustand des KI-Moduls kann ebenfalls in einem Datensatz verkörpert sein, der die Parameter der internen Verarbeitungskette enthält. Das auf eine bestimmte Transformation trainierte KI-Modul kann dann vom Kunden zur Übersetzung eigener Simulationen in die Domäne der realen Messdaten verwendet werden und es somit erleichtern, diese eigenen Simulationen für das Training der Erkennung von Objekten oder Situationen heranzuziehen.

Nach dem zuvor Beschriebenen bezieht sich die Erfindung auch auf ein Verfahren zum Trainieren eines tiefen neuronalen Netzwerks zur Anwendung in dem beschriebenen Verfahren. Dabei wird das tiefe neuronale Netzwerk als Generator in ein Generative Adversarial Network, GAN, eingebunden. Abwechselnd mit dem Generator wird ein in der Domäne B arbeitender Diskriminator trainiert, wobei der Diskriminator bewertet, zu welchem Grade in der Domäne B ununterscheidbar ist, ob eine gegebene Dichteverteilung ρ mit dem Generator erzeugt wurde oder aber direkt in der Domäne B als eine Dichteverteilung ρ_{L} einer Lern-Punktwolke P_{L} erhalten wurde.

Dabei können die gegebenen Lern-Punktewolken P_{L} für das Training insbesondere beispielsweise in der gleichen Weise zu Dichteverteilungen ρ_{L} überführt werden wie dies zuvor für die Simulations-Punktwolken P_{A} beschrieben wurde, also etwa durch Diskretisierung der Domäne B in Voxel und Auswertung der Anzahl Punkte je Voxel.

Dabei können optional die erhaltenen Dichteverteilungen ρ_{L} vor dem Training weichgezeichnet werden. Hiermit kann der Tendenz entgegen gewirkt werden, dass im Falle von Lern-Punktwolken P_{L} mit sehr wenigen Punkten, welche auf entsprechend stark lokalisierte Dichteverteilungen ρ_{L} führen, die Dichteverteilungen ρ_{A} auf eine leere Dichteverteilung ρ_{B} transformiert werden. Aus Sicht der beim Training verwendeten Loss-Funktionen kann eine leere Dichteverteilung ρ_{B} ein lokales Minimum nahe einer Verteilung ρ_{L} aus wenigen Punkten sein.

Das Training des "Generative Adversarial Network", GAN, läuft nach Art eines "Katz-und-Maus-Spiels" zwischen dem Generator und dem Diskriminator ab. Anfänglich wird der Generator Dichteverteilungen ρ_{B} produzieren, die mit den zu den Lern-Punktewolken P_{L} gehörenden Dichteverteilungen ρ_{L} nicht viel zu tun haben. Wenn das Training voranschreitet, werden die vom Generator produzierten Dichteverteilungen ρ_{B} immer ähnlicher zu den Dichteverteilungen ρ_{L}. Zugleich wird dann jedoch durch das Training des Diskriminators die Anforderung an diese Ähnlichkeit hochgeschraubt.

In einer weiteren besonders vorteilhaften Ausgestaltung werden zusätzlich ein zweiter Generator für die Transformation einer Dichteverteilung ρ_{B} in der Domäne B zu einer Dichteverteilung ρ_{A} in der Domäne A sowie ein zweiter, in der Domäne A arbeitender Diskriminator trainiert. Der zweite Diskriminator bewertet, zu welchem Grade in der Domäne A ununterscheidbar ist, ob eine gegebene Dichteverteilung ρ mit dem zweiten Generator erzeugt wurde oder aber direkt in der Domäne A als eine Dichteverteilung ρ_{A} einer Simulations-Punktwolke P_{A} erhalten wurde.

Der ebenfalls trainierte zweite Generator kann genutzt werden, um die vom ersten Generator gelieferten Dichteverteilungen ρ_{B} auf Plausibilität und Konsistenz zu prüfen.

Beispielsweise können in einer weiteren besonders vorteilhaften Ausgestaltung der erste Generator und der zweite Generator zusätzlich dahingehend optimiert werden, dass eine Dichteverteilung ρ_{A} in der Domäne A nach Anwendung des ersten Generators und anschließender Anwendung des zweiten Generators möglichst identisch reproduziert wird, und/oder dass eine Dichteverteilung ρ_{B} in der Domäne B nach Anwendung des zweiten Generators und anschließender Anwendung des ersten Generators möglichst identisch reproduziert wird. Dies ist ein Indikator dafür, dass mit der Transformation von der Domäne A in die Domäne B nur der aufzuprägende Einfluss der physikalischen Eigenschaft hinzukommt und bei der Rücktransformation von der Domäne B in die Domäne A wieder weggenommen wird, ohne dass sich der in den Messdaten verkörperte Nutzinhalt ändert.

Nach dem zuvor Beschriebenen ist das letztendliche Ziel, das mit der Erzeugung realistischerer simulierter Messdaten verfolgt wird, eine verbesserte Erkennung von Objekten und Situationen im Umfeld von Fahrzeugen. Die Erfindung bezieht sich daher auch auf ein Verfahren zur Erkennung mindestens eines Objekts, und/oder mindestens einer Situation, im Umfeld eines Fahrzeugs, wobei das Fahrzeug mindestens einen Sensor zur physikalischen Erfassung von Messdaten aus mindestens einem Teil des Umfelds des Fahrzeugs umfasst und wobei die physikalisch erfassten Messdaten von einem Klassifikatormodul dahingehend klassifiziert werden, welche Objekte bzw. Situationen im Umfeld des Fahrzeugs vorhanden sind. Es wird ein KI-Modul als Klassifikatormodul gewählt, und dieses ist oder wird mit Trainingsdaten trainiert, die den zuvor beschriebenen Datensatz mit simulierten Messdaten umfassen.

Vorteilhaft wird in Antwort auf die Erkennung mindestens eines Objekts, bzw. einer Situation, eine für den Fahrer des Fahrzeugs wahrnehmbare physikalische Warneinrichtung, ein Antriebssystem, ein Lenksystem, und/oder ein Bremssystem, des Fahrzeugs angesteuert zwecks Vermeidung einer Kollision zwischen dem Fahrzeug und dem Objekt, und/oder zwecks Anpassung der Geschwindigkeit und/oder Trajektorie des Fahrzeugs. Das Training in der beschriebenen Weise erhöht die Wahrscheinlichkeit, dass Objekte und Situationen, die in den simulierten Messdaten verkörpert sind, auch im realen Fahrbetrieb aus den durch physikalische Messung erhaltenen Messdaten richtig klassifiziert werden und die vorgesehene Reaktion auslösen.

Die beschriebenen Verfahren können insbesondere jeweils in einer Software implementiert sein, die nicht nur im Zusammenhang mit neuer Hardware, sondern beispielsweise auch als Add-On, Update oder Upgrade für die Weiternutzung bestehender Hardware verwendet werden kann und insofern ein eigenständig verkaufbares Produkt mit Kundennutzen darstellt. Daher bezieht sich die Erfindung auch auf ein Computerprogramm, enthaltend maschinenlesbare Anweisungen, die, wenn sie auf einem Computer, und/oder auf einem Steuergerät, ausgeführt werden, den Computer, und/oder das Steuergerät, dazu veranlassen, eines der beschriebenen Verfahren auszuführen. Ebenso bezieht sich die Erfindung auch auf einen maschinenlesbaren Datenträger oder ein Downloadprodukt mit dem Computerprogramm.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: Ausführungsbeispiel des Verfahrens 100;
- Figur 2: Beispielhafte Punktwolken P_{A} und P_{B} mit zugehörigen Dichteverteilungen ρ_{A} und ρ_{B};
- Figur 3: Umwandlung der Punktwolke P_{A} in ein Bild der Dichteverteilung ρ_{A};
- Figur 4: Ausführungsbeispiel des Verfahrens 200;
- Figur 5: Ausführungsbeispiel des Verfahrens 300.

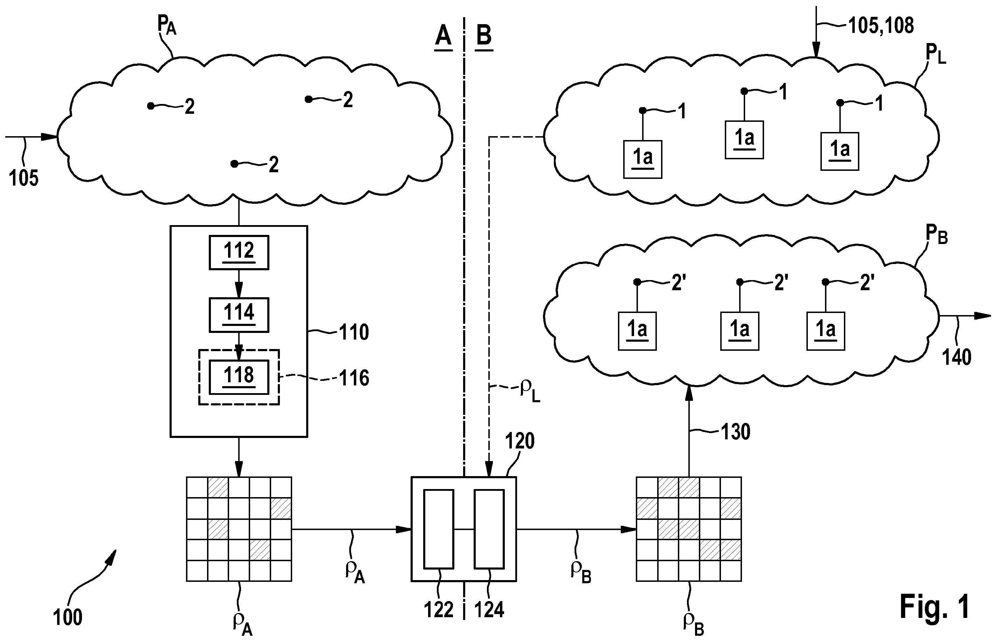

Figur 1 zeigt ein Ausführungsbeispiel des Verfahrens 100. In dem in Figur 1 gezeigten Beispiel sind gemäß Schritt 105 Objektlokalisierungen durch einen Radarsensor als Messdaten 1, 2 gewählt worden, und gemäß Schritt 108 sind Störungen und Artefakte, die bei der physikalischen Aufnahme der Radardaten 1 entstehen, als Eigenschaft 1a der physikalischen Messdaten 1 gewählt worden, die den simulierten Messdaten 2 aufzuprägen ist. Die physikalisch gemessenen Messdaten 1, denen die Eigenschaft 1a zu entnehmen ist, bilden die Lern-Punktwolke P_{L} und sind in der Domäne B angesiedelt. Die simulierten Messdaten 2 bilden die Simulations-Punktwolke P_{A} und sind in der Domäne A angesiedelt.

Gemäß Schritt 110 wird die Simulations-Punktwolke P_{A} in eine Dichteverteilung ρ_{A} in der Domäne A überführt. Hierzu wird gemäß Schritt 112 die Domäne A in Voxel diskretisiert, und gemäß Schritt 114 wird jeder Punkt der Simulations-Punktwolke P_{A} eindeutig genau einem Voxel zugeordnet. Optional kann gemäß Schritt 116 die Dichteverteilung ρ_{A} als Bild interpretiert werden, wobei insbesondere gemäß Schritt 118 die zu mehreren Simulations-Punktewolken P_{A} gehörenden Dichteverteilungen ρ_{A} in einem Bild zusammengefasst sein können. Zur Veranschaulichung ist die Dichteverteilung ρ_{A} in Figur 1 als Bild skizziert.

Die Dichteverteilung ρ_{A} wird gemäß Schritt 120 in eine Dichteverteilung ρ_{B} in der Domäne B überführt. Gemäß Schritt 122 wird diese Transformation mit einem KI-Modul durchgeführt, welches dazu trainiert ist, solche Dichteverteilungen ρ_{B} zu erzeugen, die sich von aus Lern-Punktewolken P_{L} erhaltenen Dichteverteilungen ρ_{L} nicht unterscheiden lassen. Die Dichteverteilung ρ_{B} in der Domäne B ist ebenfalls als Bild veranschaulicht.

Aus der Dichteverteilung ρ_{B} wird die Ergebnis-Punktewolke P_{B} in der Domäne B erhalten. Die ursprünglichen simulierten Messdaten 2 liegen hier in einer abgeänderten Fassung 2' vor. Die Änderung rührt von dem Einfluss der Eigenschaft 1a her, die den abgeänderten Messdaten 2' nunmehr anhaftet. Daher wird gemäß Schritt 140 die Ergebnis-Punktewolke P_{B} als Ergebnis des Aufprägens des Einflusses der Eigenschaft 1a auf die simulierten Messdaten 2 in der Simulations-Punktewolke P_{A} gewertet.

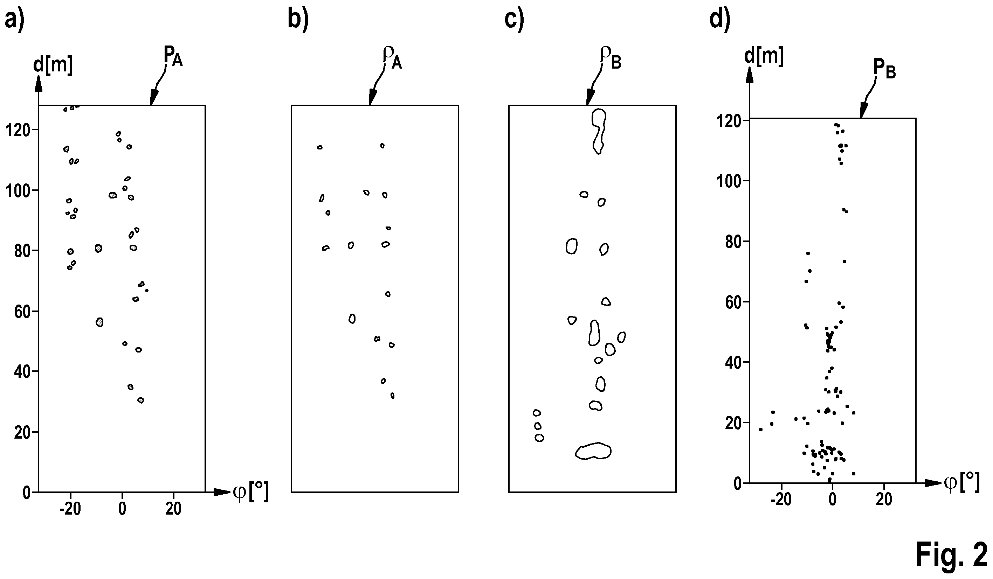

Figur 2 zeigt ein reales Beispiel für die Umwandlung einer aus simulierten Radardaten bestehenden Punktwolke P_{A} in eine Ergebnis-Punktwolke P_{B}. Die Reflexe sind aufgetragen als Funktion des Winkels φ relativ zur Fahrtrichtung des in Figur 2 nicht eingezeichneten Fahrzeugs und der Entfernung in Richtung dieses Winkels.

Figur 2a zeigt die simulierten Radar-Reflexe. Figur 2b zeigt die zugehörige Dichteverteilung ρ_{A} in der Domäne A. Figur 2c zeigt die in die Domäne B transformierte Dichteverteilung ρ_{B}.

Bereits aus der Darstellung der Dichteverteilung ρ_{B} in Figur 2c lässt sich erahnen, welche Veränderungen die Messdaten bei der realen physikalischen Messung erfahren. Generell scheinen die Radar-Reflexe deutlich unschärfer zu werden. Weiterhin tauchen speziell in der Nähe des Fahrzeugs, also zu geringeren Entfernungen hin, Komponenten in der Dichteverteilung ρ_{B} auf, die in der Dichteverteilung ρ_{A} nicht vorhanden sind. Bei größeren Entfernungen verschwinden hingegen in der Dichteverteilung ρ_{B}, die in der Dichteverteilung ρ_{A} noch vorhanden waren.

Insbesondere die in der Dichteverteilung ρ_{B} auftretenden zusätzlichen Komponenten wären allein auf der Basis der ursprünglichen simulierten Punktewolke P_{A} nur schwer oder gar nicht zu simulieren gewesen, da sie primär dem Radarsensor entspringen und nicht den Gegebenheiten im Fahrzeugumfeld, die Teil der Simulation sind.

Noch deutlicher treten die genannten Unterschiede in der Darstellung der Ergebnis-Punktewolke P_{B} in Figur 2d. Im Vergleich zu Figur 2a erscheint nicht nur jeder Radar-Reflex als solcher unscharf, sondern zusammenhängende größere Reflexe sind auch in mehrere kleinere aufgespalten. Weiterhin treten an vielen Stellen zusätzliche Reflexe auf, wobei dieses Verhalten stark von der Entfernung d zum Fahrzeug abhängt. Je geringer diese Entfernung d, desto mehr zusätzliche Reflexe treten auf.

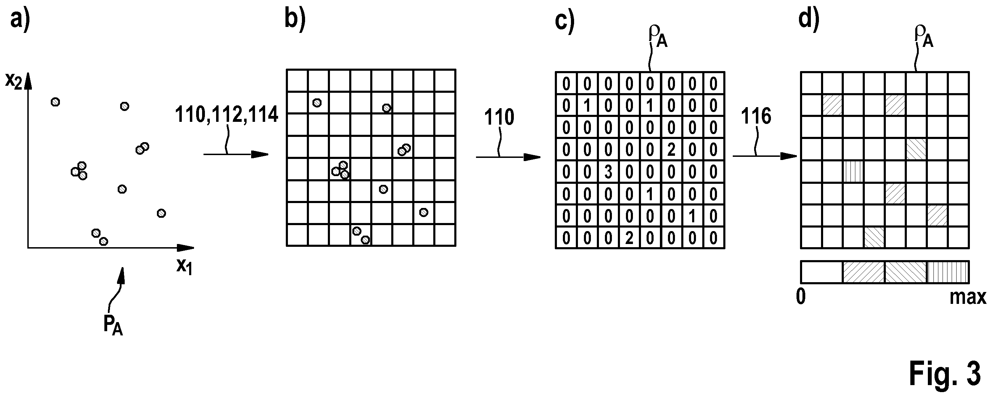

Figur 3 verdeutlicht den Weg von einer Simulations-Punktewolke P_{A} zur Interpretation der zugehörigen Dichteverteilung ρ_{A} als Bild. Figur 3a zeigt die Simulations-Punktewolke P_{A} in der zweidimensionalen Domäne A. Die Punkte der Simulations-Punktewolke P_{A} sind jeweils durch die Werte zweier Koordinaten x₁ und x₂ definiert.

Gemäß Schritt 112 wird die Domäne A in Voxel diskretisiert, und gemäß Schritt 114 wird jeder Punkt der Simulations-Punktewolke P_{A} genau einem Voxel zugeordnet. Figur 3b zeigt das Ergebnis, wobei die Voxel hier als Kästchen dargestellt sind.

Figur 3c zeigt die auf der Ebene der Voxel diskretisierte Dichteverteilung ρ_{A}. Hier ist jedem Voxel die Anzahl der dem Voxel zugeordneten Punkte zugeschrieben worden.

Gemäß Schritt 116 wird die Dichteverteilung ρ_{A} als Bild interpretiert, wobei der Anzahl der jedem Voxel zugeordneten Punkte ein Intensitätswert eines hierzu korrespondieren Pixels zugeschrieben wird. Somit entsteht aus der Punktewolke P_{A} letztendlich ein Graustufenbild, das der Verarbeitung durch ursprünglich für Bilder gedachte tiefe neuronale Netzwerke zugänglich ist. In Figur 3 sind beispielhaft nur vier unterschiedliche Graustufen durch unterschiedliche Schraffuren dargestellt.

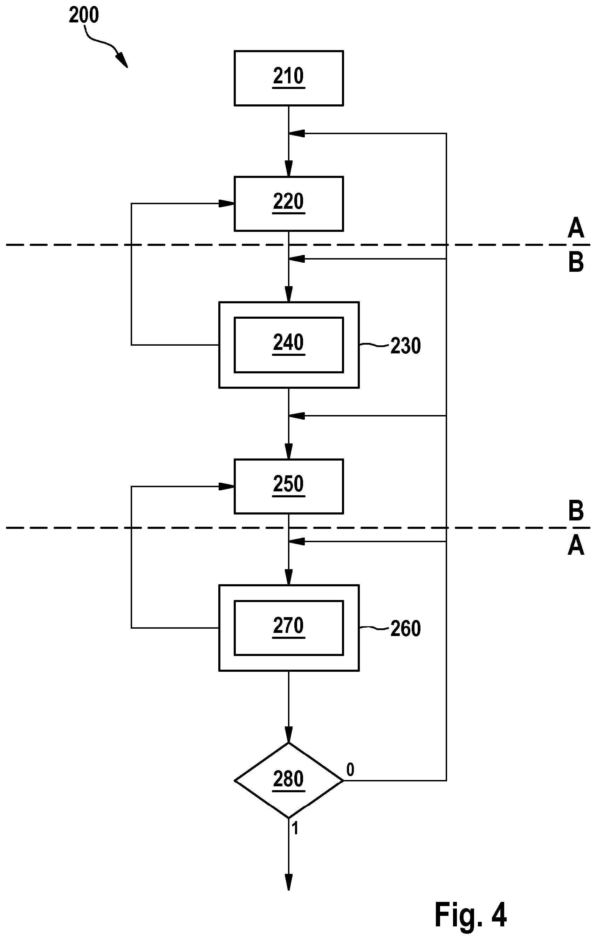

Figur 4 zeigt ein Ausführungsbeispiel des Verfahrens 200. Gemäß Schritt 210 wird das tiefe neuronale Netzwerk für die Transformation von der Domäne A in die Domäne B als Generator in ein Generative Adversarial Network, GAN, eingebunden. Dieser Generator wird in Schritt 220 trainiert. Weiterhin wird in Schritt 230 ein in der Domäne B arbeitender Diskriminator trainiert. Dieser Diskriminator bewertet, zu welchem Grade die vom Generator erzeugten Dichteverteilungen ρ_{B} von den direkt in der Domäne B aus Lern-Punktewolken P_{L} erzeugten Dichteverteilungen ρ_{L} ununterscheidbar sind. Das Training 220 des Generators und das Training 230 des Diskriminators erfolgen im ständigen Wechsel, d.h., jeder Iterationsschritt trägt sowohl zum Training 220 des Generators als auch zum Training 230 des Diskriminators bei.

Es wird gemäß Schritt 250 ein zweiter Generator für die Rücktransformation in die Domäne A trainiert. Zusätzlich wird gemäß Schritt 260 ein zweiter, in der Domäne A arbeitender Diskriminator trainiert. Gemäß Schritt 270 bewertet dieser zweite Diskriminator, inwieweit die mit dem zweiten Generator erzeugten Dichteverteilungen in der Domäne A ununterscheidbar sind von den direkt in der Domäne A aus Simulations-Punktewolken P_{A} erzeugten Dichteverteilungen ρₐ. Auch das Training 250 des zweiten Generators und das Training 260 des zweiten Diskriminators erfolgen im ständigen Wechsel, d.h. jeder diesbezügliche Iterationsschritt trägt sowohl zum Training 250 des zweiten Generators als auch zum Training 260 des zweiten Diskriminators bei.

Gemäß Schritt 280 werden beide Generatoren zusätzlich dahingehend optimiert, dass eine gegebene Dichteverteilung nach Transformation in die jeweils andere Domäne und Rücktransformation in die ursprüngliche Domäne möglichst identisch reproduziert wird. Ist dies nicht in hinreichendem Maße der Fall (Wahrheitswert 0), wird zu einem der vorherigen Trainings 220, 230, 250 oder 260 zurückverzweigt. Ist diese Selbstkonsistenzbedingung hingegen hinreichend erfüllt (Wahrheitswert 1), ist das Training beendet.

Selbstverständlich können nach jedem Training 220, 230 oder 250 noch weitere Prüfungen von Bedingungen vorgesehen sein, ob das Training einen hinreichenden Erfolg gebracht hat. Diese weiteren Prüfungen sind aus Gründen der Übersichtlichkeit in Figur 4 nicht eingezeichnet.

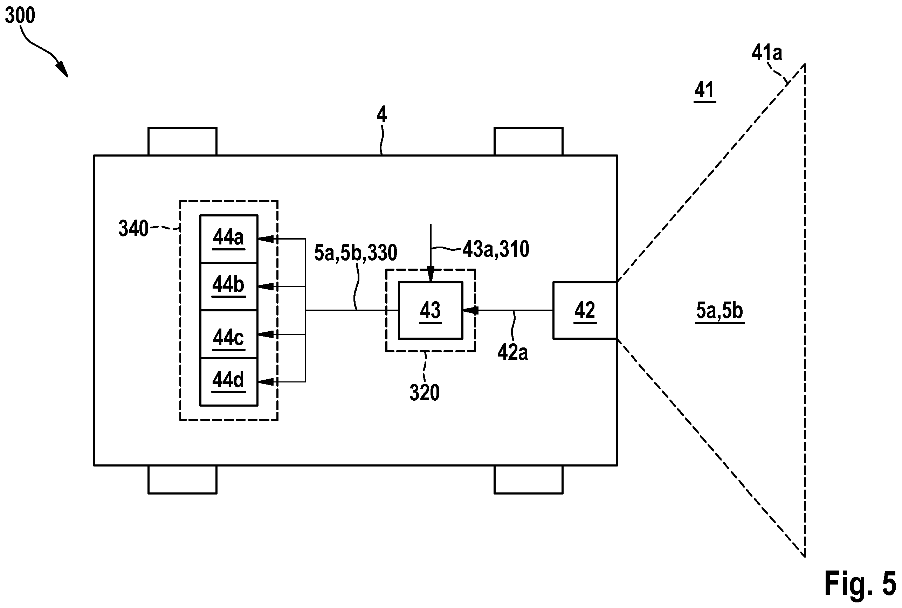

Figur 5 zeigt ein Ausführungsbeispiel des Verfahrens 300. Das Fahrzeug 4, auf dem das Verfahren 300 angewendet wird, verfügt über einen Sensor zur physikalischen Erfassung von Messdaten 42a aus mindestens einem Teil 41a des Fahrzeugumfelds 41. Die Klassifikation, welche Objekte 5a bzw. Situationen 5b in den Messdaten 42a verkörpert sind, wird in Schritt 330 von dem Klassifikator 43 vorgenommen. Gemäß Schritt 320 wurde ein zuvor in Schritt 310 mit Trainingsdaten 43a trainiertes KI-Modul als Klassifikator 43 gewählt.

In Antwort darauf, dass ein bestimmtes Objekt 5a, bzw. eine bestimmte Situation 5b, erkannt wurde, wird gemäß Schritt 340 eine Warneinrichtung 44a, ein Antriebssystem 44b, ein Lenksystem 44c, und/oder ein Bremssystem 44d, des Fahrzeugs 4 angesteuert, um eine Kollision mit dem Objekt 5a zu vermeiden, bzw. um Nachteile für den Fahrer des Fahrzeugs 4 oder für andere Verkehrsteilnehmer in der Situation 5b zu vermeiden.

## Patentansprüche

1. Verfahren (300) zur Erkennung mindestens eines Objekts (5a), und/oder mindestens einer Situation (5b), im Umfeld (41) eines Fahrzeugs (4), wobei das Fahrzeug (4) mindestens einen Sensor (42) zur physikalischen Erfassung von Messdaten (42a) aus mindestens einem Teil (41a) des Umfelds (41) des Fahrzeugs (4) umfasst und wobei die physikalisch erfassten Messdaten (42a) von einem Klassifikatormodul (43) dahingehend klassifiziert werden (330), welche Objekte (5a) bzw. Situationen (5b) im Umfeld (41) des Fahrzeugs (4) vorhanden sind, wobei ein KI-Modul als Klassifikatormodul (43) gewählt wird (320) und mit Trainingsdaten (43a) trainiert ist oder trainiert wird (310), die einen Datensatz umfassen, wobei der Datensatz aus einer Vielzahl von Punktwolken P_{B} mit simulierten Messdaten (2), denen eine nicht in der Simulation enthaltene, physikalisch beobachtete Eigenschaft (1a) aufgeprägt ist, erhalten mit einem Verfahren (100) zum Aufprägen des Einflusses einer physikalischen Eigenschaft (1a), die die durch physikalische Messung erhaltenen Messdaten (1), welche in mindestens einer Lern-Punktwolke P_{L} in einer Domäne B enthalten sind, auf simulierte Messdaten (2) in einer Simulations-Punktwolke P_{A} in einer Domäne A, wobei die Messdaten (1, 2) in den Punktwolken P_{L} und P_{A} jeweils Koordinaten repräsentieren, mit den Schritten:
• die Simulations-Punktwolke P_{A} wird in eine Dichteverteilung ρ_{A} in der Domäne A überführt (110);
• die Dichteverteilung ρ_{A} wird mit einer Transformation in eine Dichteverteilung ρ_{B} in der Domäne B überführt (120), wobei diese Transformation so beschaffen ist, dass in der Domäne B ununterscheidbar ist, ob eine gegebene Dichteverteilung ρ direkt in der Domäne B als eine Dichteverteilung ρ_{L} einer Lern-Punktwolke P_{L} oder aber als Transformierte ρ_{B} einer Dichteverteilung ρ_{A} erhalten wurde, wobei die Transformation mit einem KI-Modul durchgeführt wird, welches eine mit einer Vielzahl von Parametern parametrisierte interne Verarbeitungskette aufweist, wobei die Parameter so gesetzt sind, dass in der Domäne B ununterscheidbar ist, ob eine gegebene Dichteverteilung mit dem KI-Modul erzeugt wurde oder aber direkt in der Domäne B als eine Dichteverteilung einer Lern-Punktwolke erhalten wurde, wobei das KI-Modul trainiert wurde, indem es in einem Generative Adversarial Network (GAN), gegen einen Diskriminator antritt, der versucht, die vom KI-Modul erzeugten Dichteverteilungen von direkt in der Domäne B aus Lern-Punktwolken PL erhaltenen Dichteverteilungen zu unterscheiden;
• in der Domäne B wird eine Ergebnis-Punktwolke P_{B} abhängig von der Dichteverteilung ρ_{B} erzeugt (130);
• die Ergebnis-Punktwolke P_{B} wird als Ergebnis des Aufprägens des Einflusses der gewünschten Eigenschaft (1a) auf die simulierten Messdaten (2) in der Simulations-Punktwolke P_{A} gewertet (140).

2. Verfahren (100) nach Anspruch 1, wobei die Dichteverteilung ρ_{A} in der Domäne A bestimmt wird (110), indem die Domäne A in Voxel diskretisiert wird (112), wobei jeder Punkt der Simulations-Punktwolke P_{A} eindeutig genau einem Voxel zugeordnet wird (114).

3. Verfahren (100) nach Anspruch 2, wobei die Dichteverteilung ρ_{A} als Bild interpretiert wird (116), in dem jeder Voxel ein Pixel repräsentiert mit einem Intensitätswert, der von der Anzahl der dem Voxel zugeordneten Punkte abhängt.

4. Verfahren (100) nach Anspruch 3, wobei zu unterschiedlichen Simulations-Punktewolken P_{A} gehörende Dichteverteilungen ρ_{A}, die sich auf dasselbe Messobjekt beziehen, als unterschiedliche Farbkanäle in einem Bild zusammengefasst sind (118).

5. Verfahren (100) nach Anspruch 4, wobei die unterschiedlichen Simulations-Punktwolken P_{A} sich auf Simulationen unterschiedlicher physikalischer Kontraste beziehen, die das Messobjekt hervorruft.

6. Verfahren (100) nach einem der Ansprüche 1 bis 5, wobei Objektlokalisierungen durch einen Radarsensor, durch einen Lidar-Sensor, und/oder durch einen Ultraschallsensor, in Form mindestens von Winkeln und zugehörigen Abständen als Messdaten (1, 2) gewählt werden (105).

7. Verfahren (100) nach einem der Ansprüche 1 bis 6, wobei mindestens eine Störung oder ein Artefakt, der bei der physikalischen Messung der Messdaten (1) auftritt, als Eigenschaft (1a) gewählt wird (108), deren Einfluss der Simulations-Punktwolke P_{A} der simulierten Messdaten (2) aufzuprägen ist.

8. Verfahren (100) nach einem der Ansprüche 1 bis 7, wobei die Transformation (120) mit einem KI-Modul durchgeführt wird (122), welches eine mit einer Vielzahl von Parametern parametrisierte interne Verarbeitungskette aufweist, wobei die Parameter so gesetzt sind, dass in der Domäne B ununterscheidbar ist, ob eine gegebene Dichteverteilung ρ mit dem KI-Modul erzeugt wurde oder aber direkt in der Domäne B als eine Dichteverteilung ρ_{L} einer Lern-Punktwolke P_{L} erhalten wurde.

9. Verfahren (100) nach Anspruch 8, wobei ein KI-Modul gewählt wird (124), welches mindestens ein tiefes neuronales Netz auf der Basis von Convolution-Filtern umfasst.

10. KI-Modul, trainiert zur Durchführung des Verfahrens nach 8 oder 9, und/oder Datensatz, enthaltend die Parameter der internen Verarbeitungskette eines solchermaßen trainierten Kl-Moduls.

11. Verfahren (200) zum Trainieren eines tiefen neuronalen Netzwerks zur Anwendung in dem Verfahren nach Anspruch 9, wobei das tiefe neuronale Netzwerk als Generator in ein Generative Adversarial Network, GAN, eingebunden wird (210), wobei abwechselnd mit dem Generator (220) ein in der Domäne B arbeitender Diskriminator trainiert wird (230) und wobei der Diskriminator bewertet (240), zu welchem Grade in der Domäne B ununterscheidbar ist, ob eine gegebene Dichteverteilung p mit dem Generator erzeugt wurde oder aber direkt in der Domäne B als eine Dichteverteilung ρ_{L} einer Lern-Punktwolke P_{L} erhalten wurde.

12. Verfahren (200) nach Anspruch 11, wobei zusätzlich ein zweiter Generator (250) für die Transformation einer Dichteverteilung ρ_{B} in der Domäne B zu einer Dichteverteilung ρ_{A} in der Domäne A sowie ein zweiter, in der Domäne A arbeitender Diskriminator (260) trainiert werden, wobei der zweite Diskriminator bewertet (270), zu welchem Grade in der Domäne A ununterscheidbar ist, ob eine gegebene Dichteverteilung ρ mit dem zweiten Generator erzeugt wurde oder aber direkt in der Domäne A als eine Dichteverteilung ρ_{A} einer Simulations-Punktwolke P_{A} erhalten wurde.

13. Verfahren (200) nach Anspruch 12, wobei der erste Generator und der zweite Generator zusätzlich dahingehend optimiert werden (280), dass eine Dichteverteilung ρ_{A} in der Domäne A nach Anwendung des ersten Generators und anschließender Anwendung des zweiten Generators möglichst identisch reproduziert wird, und/oder dass eine Dichteverteilung ρ_{B} in der Domäne B nach Anwendung des zweiten Generators und anschließender Anwendung des ersten Generators möglichst identisch reproduziert wird.

14. Verfahren (300) nach Anspruch 1 bis 13, wobei in Antwort auf die Erkennung (330) mindestens eines Objekts (5a), bzw. einer Situation (5b), eine für den Fahrer des Fahrzeugs (4) wahrnehmbare physikalische Warneinrichtung (44a), ein Antriebssystem (44b), ein Lenksystem (44c), und/oder ein Bremssystem (44d), des Fahrzeugs (4) angesteuert wird (340) zwecks Vermeidung einer Kollision zwischen dem Fahrzeug (4) und dem Objekt (5a), zur Vermeidung von Nachteilen in der Situation (5b), und/oder zwecks Anpassung der Geschwindigkeit und/oder Trajektorie des Fahrzeugs (4).

15. Computerprogramm, enthaltend maschinenlesbare Anweisungen, die, wenn sie auf einem Computer, und/oder auf einem Steuergerät, ausgeführt werden, den Computer, und/oder das Steuergerät, dazu veranlassen, ein Verfahren (100, 200, 300) nach einem der Ansprüche 1 bis 9 oder 11 bis 13 auszuführen.

## Claims

1. Method (300) for recognizing at least one object (5a), and/or at least one situation (5b), in the environment (41) of a vehicle (4), wherein the vehicle (4) comprises at least one sensor (42) for physically recording measurement data (42a) from at least one part (41a) of the environment (41) of the vehicle (4) and wherein the physically recorded measurement data (42a) are classified (330) by a classifier module (43) in regard to what objects (5a) and/or situations (5b) are present in the environment (41) of the vehicle (4), wherein an Al module is selected (320) as classifier module (43) and has been trained or is trained (310) with training data (43a) comprising a data set, wherein the data set of a multiplicity of point clouds P_{B} with simulated measurement data (2), on which a physically observed property (1a) not contained in the simulation is impressed, obtained by a method (100) for impressing the influence of a physical property (1a), the the measurement data (1) obtained by physical measurement, which are contained in at least one learning point cloud P_{L} in a domain B, onto simulated measurement data (2) in a simulation point cloud P_{A} in a domain A, wherein the measurement data (1, 2) in the point clouds P_{L} and P_{A} each represent coordinates, comprising the following steps:
• the simulation point cloud P_{A} is converted (110) into a density distribution ρ_{A} in the domain A;
• the density distribution ρ_{A} is converted (120) by a transformation into a density distribution ρ_{B} in the domain B, wherein this transformation is constituted such that in the domain B it is not possible to distinguish whether a given density distribution ρ was obtained directly in the domain B as a density distribution ρ_{L} of a learning point cloud P_{L} or else as a transform ρ_{B} of a density distribution ρ_{A}, wherein the transformation is carried out by an Al module having an internal processing chain parametrized with a multiplicity of parameters, wherein the parameters are set in such a way that in the domain B it is not possible to distinguish whether a given density distribution was generated by the Al module or else was obtained directly in the domain B as a density distribution of a learning point cloud, wherein the Al module was trained by competing in a generative adversarial network (GAN) against a discriminator attempting to distinguish the density distributions generated by the Al module from density distributions obtained directly in the domain B from learning point clouds PL;
• in the domain B a result point cloud P_{B} is generated (130) depending on the density distribution ρ_{B};
• the result point cloud P_{B} is evaluated (140) as the result of impressing the influence of the desired property (1a) onto the simulated measurement data (2) in the simulation point cloud P_{A}.

2. Method (100) according to Claim 1, wherein the density distribution ρ_{A} in the domain A is determined (110) by the domain A being discretized (112) into voxels, wherein each point of the simulation point cloud P_{A} is uniquely assigned (114) to exactly one voxel.

3. Method (100) according to Claim 2, wherein the density distribution ρ_{A} is interpreted (116) as an image, in which each voxel represents a pixel with an intensity value which is dependent on the number of points assigned to the voxel.

4. Method (100) according to Claim 3, wherein density distributions ρ_{A} associated with different simulation point clouds P_{A} and relating to the same measurement object are combined (118) as different colour channels in one image.

5. Method (100) according to Claim 4, wherein the different simulation point clouds P_{A} relate to simulations of different physical contrasts caused by the measurement object.

6. Method (100) according to any of Claims 1 to 5, wherein object localizations by a radar sensor, by a lidar sensor, and/or by an ultrasonic sensor, in the form at least of angles and associated distances are selected (105) as measurement data (1, 2).

7. Method (100) according to any of Claims 1 to 6, wherein at least one disturbance or an artefact that occurs in the physical measurement of the measurement data (1) is selected (108) as property (1a), the influence of which is to be impressed on the simulation point cloud P_{A} of the simulated measurement data (2).

8. Method (100) according to any of Claims 1 to 7, wherein the transformation (120) is carried out (122) by an Al module having an internal processing chain parametrized with a multiplicity of parameters, wherein the parameters are set in such a way that in the domain B it is not possible to distinguish whether a given density distribution ρ was generated by the Al module or else was obtained directly in the domain B as a density distribution ρ_{L} of a learning point cloud P_{L}.

9. Method (100) according to Claim 8, wherein an Al module is selected (124) which comprises at least one deep neural network on the basis of convolution filters.

10. Al module, trained for carrying out the method according to 8 or 9, and/or data set, containing the parameters of the internal processing chain of such a trained Al module.

11. Method (200) for training a deep neural network for application in the method according to Claim 9, wherein the deep neural network is incorporated (210) as a generator into a generative adversarial network, GAN, wherein alternately with the generator (220) a discriminator working in the domain B is trained (230) and wherein the discriminator assesses (240) the degree to which in the domain B it is not possible to distinguish whether a given density distribution ρ was generated by the generator or else was obtained directly in the domain B as a density distribution ρ_{L} of a learning point cloud P_{L}.

12. Method (200) according to Claim 11, wherein additionally a second generator (250) for the transformation of a density distribution ρ_{B} in the domain B to a density distribution ρ_{A} in the domain A and a second discriminator (260) working in the domain A are trained, wherein the second discriminator assesses (270) the degree to which in the domain A it is not possible to distinguish whether a given density distribution ρ was generated by the second generator or else was obtained directly in the domain A as a density distribution ρ_{A} of a simulation point cloud P_{A}.

13. Method (200) according to Claim 12, wherein the first generator and the second generator are additionally optimized (280) to the effect that a density distribution ρ_{A} in the domain A is reproduced as identically as possible after application of the first generator and subsequent application of the second generator, and/or that a density distribution ρ_{B} in the domain B is reproduced as identically as possible after application of the second generator and subsequent application of the first generator.

14. Method (300) according to Claims 1 to 13, wherein in response to the recognition (330) of at least one object (5a), and/or a situation (5b), a physical warning device (44a) perceptible to the driver of the vehicle (4), a drive system (44b), a steering system (44c), and/or a braking system (44d), of the vehicle (4) are/is controlled (340) in order to avoid a collision between the vehicle (4) and the object (5a), to avoid disadvantages in the situation (5b), and/or in order to adapt the speed and/or trajectory of the vehicle (4).

15. Computer program, containing machine-readable instructions which, when executed on a computer, and/or on a control unit, cause the computer, and/or the control unit, to execute a method (100, 200, 300) according to any of Claims 1 to 9 or 11 to 13.

## Revendications

1. Procédé (300) de détection d'au moins un objet (5a) et/ou d'au moins une situation (5b) dans l'environnement (41) d'un véhicule (4), dans lequel le véhicule (4) comprend au moins un capteur (42) pour l'acquisition physique de données de mesure (42a) provenant d'au moins une partie (41a) de l'environnement (41) du véhicule (4), et dans lequel les données de mesure acquises physiquement (42a) sont classées (330) par un module classificateur (43) afin de déterminer quels objets (5a) ou quelles situations (5b) sont présents dans l'environnement (41) du véhicule (4), un module d'IA étant sélectionné (320) comme module classificateur (43) et étant entraîné ou étant en cours d'entraînement (310) avec des données d'entraînement (43a) comprenant un ensemble de données, l'ensemble de données d'une pluralité de nuages de points P_{B} comprenant des données de mesure simulées (2) auxquelles est appliquée une propriété observée physiquement (1a) non contenue dans la simulation, étant obtenu par un procédé (100) pour appliquer l'influence d'une propriété physique (1a), les les données de mesure (1) obtenues par mesure physique, lesquelles sont contenues dans au moins un nuage de points d'apprentissage P_{L} dans un domaine B, ont en commun, sur des données de mesure simulées (2) dans un nuage de points de simulation P_{A} dans un domaine A, les données de mesure (1, 2) dans les nuages de points P_{L} et P_{A} représentant respectivement des coordonnées, comprenant les étapes suivantes :
• le nuage de points de simulation P_{A} est converti (110) en une distribution de densité ρ_{A} dans le domaine A ;
• la distribution de densité ρ_{A} est convertie par une transformation en distribution de densité ρ_{B} dans le domaine B (120), ladite transformation étant telle qu'il est impossible de distinguer, dans le domaine B, si une distribution de densité donnée p a été obtenue directement dans le domaine B en tant que distribution de densité ρ_{L} d'un nuage de points d'apprentissage P_{L} ou bien en tant que transformée ρ_{B} d'une distribution de densité ρ_{A}, la transformation étant effectuée avec un module d'IA présentant une chaîne de traitement interne paramétrée avec une pluralité de paramètres, les paramètres étant réglés de telle sorte qu'il soit impossible de distinguer, dans le domaine B, si une distribution de densité donnée a été générée par le module d'IA ou bien a été obtenue directement dans le domaine B en tant que distribution de densité d'un nuage de points d'apprentissage, le module d'IA ayant été entraîné par confrontation, dans un réseau antagoniste génératif (GAN), à un discriminateur qui tente de distinguer les distributions générées par le module d'IA de distributions de densité obtenues directement dans le domaine B à partir de nuages de points d'apprentissage PL ;
• dans le domaine B, un nuage de points de résultat P_{B} est généré (130) en fonction de la distribution de densité ρ_{B} ;
• le nuage de points de résultat P_{B} est évalué (140) comme résultat de l'application de l'influence de la propriété souhaitée (1a) sur les données de mesure simulées (2) dans le nuage de points de simulation P_{A}.

2. Procédé (100) selon la revendication 1, dans lequel la distribution de densité ρ_{A} dans le domaine A est déterminée (110) par discrétisation (112) du domaine A en voxels, chaque point du nuage de points de simulation P_{A} étant associé (114) de manière univoque à exactement un voxel.

3. Procédé (100) selon la revendication 2, dans lequel la distribution de densité ρ_{A} est interprétée (116) comme une image dans laquelle chaque voxel représente un pixel présentant une valeur d'intensité qui dépend du nombre de points associés au voxel.

4. Procédé (100) selon la revendication 3, dans lequel des distributions de densité ρ_{A} appartenant à différents nuages de points de simulation P_{A} et se rapportant au même objet de mesure sont regroupées (118) en tant que différents canaux de couleur dans une image.

5. Procédé (100) selon la revendication 4, dans lequel les différents nuages de points de simulation P_{A} se rapportent à des simulations de différents contrastes physiques produits par l'objet de mesure.

6. Procédé (100) selon l'une des revendications 1 à 5, dans lequel des localisations d'objets par un capteur radar, par un capteur lidar et/ou par un capteur à ultrasons, sous la forme au moins d'angles et de distances associées, sont choisies (105) comme données de mesure (1, 2).

7. Procédé (100) selon l'une des revendications 1 à 6, dans lequel au moins une perturbation ou un artefact qui se produit lors de la mesure physique des données de mesure (1) est choisi (108) comme propriété (1a) dont l'influence doit être appliquée au nuage de points de simulation P_{A} des données de mesure simulées (2).

8. Procédé (100) selon l'une des revendications 1 à 7, dans lequel la transformation (120) est effectuée avec un module d'IA (122) présentant une chaîne de traitement interne paramétrée avec une pluralité de paramètres, les paramètres étant réglés de telle sorte qu'il soit impossible de distinguer, dans le domaine B, si une distribution de densité donnée p a été générée avec le module d'IA ou bien a été obtenue directement dans le domaine B en tant que distribution de densité ρ_{L} d'un nuage de points d'apprentissage P_{L}.

9. Procédé (100) selon la revendication 8, dans lequel on choisit (124) un module d'IA qui comprend au moins un réseau neuronal profond à base de filtres de convolution.

10. Module d'IA, entraîné pour la mise en œuvre du procédé selon 8 ou 9, et/ou ensemble de données contenant les paramètres de la chaîne de traitement interne d'un module d'IA ainsi entraîné.

11. Procédé (200) d'entraînement d'un réseau neuronal profond destiné à être utilisé dans le procédé selon la revendication 9, dans lequel le réseau neuronal profond est intégré (210) en tant que générateur dans un réseau antagoniste génératif, GAN, dans lequel un discriminateur fonctionnant dans le domaine B est entraîné (230) en alternance au moyen du générateur (220) et dans lequel le discriminateur évalue (240) à quel degré il est impossible de distinguer, dans le domaine B, si une distribution de densité donnée p a été générée au moyen du générateur ou bien a été obtenue directement dans le domaine B en tant que distribution de densité ρ_{L} d'un nuage de points d'apprentissage P_{L}.

12. Procédé (200) selon la revendication 11, dans lequel sont en outre entraînés un second générateur (250) pour la transformation d'une distribution de densité ρ_{B} dans le domaine B en une distribution de densité ρ_{A} dans le domaine A, ainsi qu'un second discriminateur (260) fonctionnant dans le domaine A, le second discriminateur évaluant (270) à quel degré il est impossible de distinguer, dans le domaine A, une distribution de densité donnée p a été générée avec le second générateur ou bien a été obtenue directement dans le domaine A en tant que distribution de densité ρ_{A} d'un nuage de points de simulation P_{A}.

13. Procédé (200) selon la revendication 12, dans lequel le premier générateur et le second générateur sont en outre optimisés (280) de telle sorte qu'une distribution de densité ρ_{A} dans le domaine A, après application du premier générateur puis application du second générateur, soit reproduite de la manière la plus identique possible et/ou qu'une distribution de densité _{PB} dans le domaine B, après application du second générateur puis application du premier générateur, soit reproduite de la manière la plus identique possible.

14. Procédé (300) selon les revendications 1 à 13, dans lequel, en réponse à la détection (330) d'au moins un objet (5a) ou d'une situation (5b), un dispositif d'avertissement physique (44a) perceptible par le conducteur du véhicule (4), un système d'entraînement (44b), un système de direction (44c) et/ou un système de freinage (44d) du véhicule (4) est commandé (340) afin d'éviter une collision entre le véhicule (4) et l'objet (5a), d'éviter des inconvénients dans ladite situation (5b) et/ou afin d'adapter la vitesse et/ou la trajectoire du véhicule (4).

15. Programme d'ordinateur contenant des instructions lisibles par une machine qui, lorsqu'elles sont exécutées sur un ordinateur et/ou sur un dispositif de commande, amènent l'ordinateur, et/ou le dispositif de commande à mettre en œuvre un procédé (100, 200, 300) selon l'une des revendications 1 à 9 ou 11 à 13.
